# EUROPEAN PATENT SPECIFICATION

(11) **EP 4 258 871 B1**
(45) Date of publication and mention of the grant of the patent: **23.10.2024**
(21) Application number: 21814925.0
(22) Date of filing: 04.11.2021
(51) Int. Cl.: A01N 25/10, A01N 43/16, A01N 59/18, A01N 25/34, A01P 1/00

(54) **METHOD FOR MERCURISATION OF CELLULOSE-CONTAINING MATERIALS FOR IMPARTING BACTERICIDAL AND VIRUCIDAL ACTIVITY TO THEM**
VERFAHREN ZUR MERCURISIERUNG VON CELLULOSEHALTIGEN MATERIALIEN ZUR VERLEIHUNG VON BAKTERIZIDER UND VIRUZIDER AKTIVITÄT AN DIESE
PROCÉDÉ DE MERCURISATION DE MATIÈRES CONTENANT DE LA CELLULOSE POUR LEUR CONFÉRER UNE ACTIVITÉ BACTÉRICIDE ET VIRUCIDE

(30) Priority: 10.12.2020 US 202063123726 P
(43) Date of publication of application: 18.10.2023
(73) Proprietor: Milovanov, Ioulia, 4934703 Petah Tiqwa (IL); Milovanov, Akim, 4934703 Petah Tiqwa (IL)
(72) Inventor: MILOVANOV, Ioulia, 4934703 Petah Tiqwa (IL); MILOVANOV, Akim, 4934703 Petah Tiqwa (IL)
(74) Representative: Balder IP Law, S.L.
(86) International application number: PCT/IL2021/051309
(87) International publication number: WO 2022/123553

(56) References cited:
- WO-A1-2015/011630
- WO-A2-2010/015801
- JP-A- H05 339 115

## Description

### TECHNICAL FIELD

The present application relates to the field of material metallisation in general, and to the method for photochemical mercurisation of cellulose-containing carrier materials or products thereof for imparting them bactericidal and virucidal properties, in particular.

### BACKGROUND

In recent years, the number of viral and bacteriological infections has significantly increased, which is a global threat due to their constant migration. One solution to this problem is the development of antiviral vaccines, but because of their specificity, vaccines are only effective for preventing infections caused by specific bacteria or viruses. Because vaccine production is a long and laborious process, it is often difficult to stock up on the right amount of a particular vaccine ahead of time. Therefore, there is an urgent need for agents demonstrating virucidal and bactericidal activity against a wide range of bacteria and viruses.

To solve the problem described above, inorganic bactericidal and virucidal drugs have been developed, the spectrum of which is wider than that of organic antiviral drugs. It is well known that metal ions, such as Cu(I), Cu(II), Ag(I), Hg(I), Zn (II), Bi(III), Fe(II) *etc*., even at relatively low concentrations, have bactericidal properties due to the oligodynamic effect arising from their toxicity on living cells, algae, mould, spores, fungi, viruses and prokaryotic and eukaryotic microorganisms. This oligodynamic effect is demonstrated, for example, by the ions of mercury, silver, copper, iron, lead, zinc, bismuth, gold, aluminium and other metals, with mercury ions being the most effective in this list. This determines the existence of a sufficient number of works on methods of obtaining metallised materials for wide applications in general and mercurised materials in particular.

All known works on the methods of metallisation of materials to give them bactericidal and antiviral properties are reduced to three main directions. The first direction is the application of metal-containing compounds to the surface of the carrier material in the form of varnishes, paints, gels, *etc.,* including mechanical, electrochemical, adsorption and other methods. WO 2011129759 A1, for example, proposes a method for preparing antimicrobial compositions in the form of gels containing at least five components, including a silver salt, which have a bactericidal effect. The gel obtained after evaporation is applied to the surface of the carrier material and is used for medical purposes in the treatment of burns, scars, bacterial infections, and viral/fungal infections. CN 102669179 B relates to a method for preparing a composition containing a nanosilver colloid, an organic antibacterial agent, a solvent, a polymer binder and water. This formulation applied to medical masks ensures safe handling and rapid elimination of H1N1 influenza virus and H5N1 avian influenza virus.

US 20160150793 A1 relates to an additive with biocidal properties based on an active agent having antimicrobial and antifouling properties, wherein the additive corresponds to a supporting inert substrate or carrier, which has been modified with antimicrobial agents. US 20160150793 A1 further provides a process for producing a surface-metalised fibre, yarn, or fabric, the process comprising feeding a continuous fibre, yarn, or fabric from a feeder roller into a graphene deposition chamber containing therein a graphene dispersion and further coating it with a metal from a solution containing compounds of Co, Hg, Mg and others. JPH05339115 describes an antibacterial material that comprises particles of the actives that are completely used and do not run away in the process of treatment, for example of water. Cellulose and a material made of fibres such as rayon, viscose, wood, nylon are mixed in a solution with cellulose and the antibacterial particles. Washing, drying are then performed. Porous cellulose beads or sheet like cellulose can be obtained that is antibacterial and can be coated or impregnated on a substrate such as a non-woven fabric, paper. There are no step of irradiation or immersing in a reducing solution of alkali.

All works related to the first direction of imparting bactericidal and antiviral properties to the carrier material with the composition of metal-containing compounds applied to its surface have one common drawback: the relatively weak adhesion of metal-containing compositions to the surface of the carrier material. The compositions are relatively easy to remove when washing or rinsing the product, which significantly reduces the scope of these materials, as well as the possibility of their reuse.

The second direction of work on the metallisation of materials to impart bactericidal and antiviral properties to them is the encapsulation, intercalation, saturation or modification of the carrier material with nanoparticles or metal ions. RU 2619704 C1 describes a method for producing a textile material with antibacterial properties for workwear, which includes the process of treating the material with a high-frequency capacitive discharge in a low-temperature plasma at reduced pressure, followed by impregnation with a colloidal aqueous solution of silver nanoparticles and drying. The disadvantages of the method include a relatively narrow applicability (the method is applicable only for cotton and modified cotton fabrics), as well as technological cumbersomeness.

US 20140141073 A1 describes a method for imparting antiviral properties to a hydrophilic polymeric material, which includes preparing a suspension of a hydrophilic polymer, dispersing a mixture of copper ions powder containing copper oxide and copper oxide in this suspension, and then extrusion or moulding the suspension to form a hydrophilic polymeric material. In this case, the water-insoluble particles that release the Cu(I) and Cu(II) ions are directly and completely encapsulated in the hydrophilic polymeric material. The disadvantages of this method include both its technological cumbersomeness and the fact that the composite obtained in this way requires further refinement on the production line.

US 7288264 B1 provides a combination of an adherent antimicrobial coating including a nitrogen-containing polycationic polymer matrix immobilised on a material surface, and biocidal non-leaching metallic materials bound to the matrix. The antimicrobial materials contain a combination of organic materials that form the matrix immobilised on the surface of the product due to covalent bonds and ionic interactions. The antimicrobial coating does not release the metallic materials for at least five days. The main disadvantage of all the works in the second direction is the relatively weak chemical bond of metals or related compounds intercalated into the carrier material with the matrix, which leads to a decrease in the duration of their bactericidal action, as well as to their undesirable leakage into the environment.

In general, bactericidal properties of various metals are well known, in particular, mercury, copper, silver, platinum and gold. Metallisation with the last three is economically impractical because of their very high cost. In addition, silver coating of the support material is unstable.

An attempt was also made to metallise cellulose-containing supports with copper using the proposed method, but to no avail. Since the radius of the copper ion is much smaller than the radius of the mercury ion, the binding energy of the Cu ligand is much higher than that of the Hg ligand. The copper ion attracts an electron of the ligand so strongly that it strips this electron away from the ligand. As a result, the copper ion is reduced, thus passing to a lower oxidation state. The copper ion is not bound (or poorly bound) to the cellulose molecule and is easily washed out by washing the cellulose carrier with water and treating with alkali. Consequently, the set goal of rigidly binding the metal ion to the carrier material is not achieved.

In view of the above, there is a long-felt need for an industrial carrier material mercurisation process that is simple, economically viable, and versatile for a wide range of bactericidal and virucidal materials.

### SUMMARY

The present invention relates to a method for mercurisation of a cellulose-containing carrier material or article obtained from said carrier material, for imparting bactericidal and virucidal properties to said carrier material, said method comprising:
(1) providing an aqueous solution of a water-soluble mercury-containing compound, a porous substrate and the cellulose-containing carrier material;
(2) contacting said porous substrate with said aqueous solution of the mercury-containing compound or soaking said porous substrate into said aqueous solution of the mercury-containing compound;
(3) placing said carrier material of Step (1) in a direct contact with and on top of said porous substrate obtained in Step (2) (wetted with or soaked in said aqueous solution of the mercury-containing compound) and pressing said cellulose-containing carrier material to ensure rapid diffusion of the mercury ions from the porous substrate into the carrier material;
(4) placing the wet carrier material obtained in Step (3) and containing diffused mercury ions in a horizontal position and irradiating said wet carrier material with full-spectrum bright light, thereby carrying out a photochemically initiated radical reaction of the abstraction of a hydrogen atom from cellulose molecules of the carrier material and binding said mercury ions to cellulose molecules within the carrier material, wherein said mercury ions become tightly bound to the carrier material and consequently, impart bactericidal and virucidal properties to said carrier material;
(5) intermediate rinsing of the carrier material obtained in Step (4) with running water;
(6) fixing the rinsed carrier material obtained in Step (5), which contains the bound mercury ions, by shortly immersing said carrier material into a hot aqueous solution of alkali, thereby hydrating and neutralising the bound mercury ions;
(7) washing and rinsing the carrier material obtained in Step (6) with running water several times to remove water-soluble salts and water-insoluble (precipitated) oxides of mercury-containing compounds which did not react in the photochemical reaction; and
(8) air or vacuum drying of the washed carrier material from Step (7) to obtain the ready-to-use carrier material having bactericidal and virucidal properties.

The selective mercurisation of the carrier material to obtain a bactericidal or virucidal image on this carrier material or article obtained from said carrier material can also be performed in all steps of the method (1-8). However, in Step 4, light irradiation is performed through a negative slide or slotted stencil.

### DETAILED DESCRIPTION

In the following description, various aspects of the present application will be described. For purposes of explanation, specific details are set forth in order to provide a thorough understanding of the present application. However, it will also be apparent to one skilled in the art that the present application may be practiced without the specific details presented herein. Furthermore, well-known features may be omitted or simplified in order not to obscure the present application.

The term "comprising", used in the claims, is "open ended" and means the elements recited, or their equivalent in structure or function, plus any other element or elements which are not recited. It should not be interpreted as being restricted to the means listed thereafter; it does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a composition comprising x and z" should not be limited to compositions consisting only of components x and z. Also, the scope of the expression "a method comprising the steps x and z" should not be limited to methods consisting only of these steps.

Unless specifically stated, as used herein, the term "about" is understood as within a range of normal tolerance in the art, for example within two standard deviations of the mean. In one embodiment, the term "about" means within 10% of the reported numerical value of the number with which it is being used, preferably within 5% of the reported numerical value. For example, the term "about" can be immediately understood as within 10%, 9%, 8%, 7%, 6%, 5%, 4%, 3%, 2%, 1%, 0.5%, 0.1%, 0.05%, or 0.01% of the stated value. In other embodiments, the term "about" can mean a higher tolerance of variation depending on for instance the experimental technique used. Said variations of a specified value are understood by the skilled person and are within the context of the present invention. As an illustration, a numerical range of "about 1 to about 5" should be interpreted to include not only the explicitly recited values of about 1 to about 5, but also include individual values and sub-ranges within the indicated range. Thus, included in this numerical range are individual values such as 2, 3, and 4 and sub-ranges, for example from 1-3, from 2-4, and from 3-5, as well as 1, 2, 3, 4, 5, or 6, individually. This same principle applies to ranges reciting only one numerical value as a minimum or a maximum. Unless otherwise clear from context, all numerical values provided herein are modified by the term "about". Other similar terms, such as "substantially", "generally", "up to" and the like are to be construed as modifying a term or value such that it is not an absolute. Such terms will be defined by the circumstances and the terms that they modify as those terms are understood by those of skilled in the art. This includes, at very least, the degree of expected experimental error, technical error and instrumental error for a given experiment, technique or an instrument used to measure a value.

As used herein, the term "and/or" includes any and all combinations of one or more of the associated listed items. Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the specification and relevant art and should not be interpreted in an idealized or overly formal sense unless expressly so defined herein. Well-known functions or constructions may not be described in detail for brevity and/or clarity.

It will be understood that when a material or a material layer, such as a carrier material is referred to as being "on", "attached to", "connected to", "coupled with", "contacting", *etc*., another material layer, such as a substrate material, it can be directly on, attached to, connected to, coupled with or contacting the other material layer or intervening layers may also be present. In contrast, when a material layer is referred to as being, for example, "directly on", "directly attached to", "directly connected to", "directly coupled with", "placing in a direct contact" or "directly contacting" another material layer, there are no intervening layers present. It will also be appreciated by those of skill in the art that references to a structure or feature that is disposed "adjacent" another feature may have portions that overlap or underlie the adjacent feature.

The present invention describes a method for mercurisation of a cellulose-containing carrier material or article obtained from said carrier material, for imparting bactericidal and virucidal properties to said carrier material, said method comprising:
(1) providing an aqueous solution of a mercury-containing compound, a porous substrate and the cellulose-containing carrier material;
(2) contacting said porous substrate with said aqueous solution of the mercury-containing compound or soaking said porous substrate into said aqueous solution of the mercury-containing compound;
(3) placing said carrier material of Step (1) in a direct contact with and on top of said porous substrate obtained in Step (2) (wetted with or soaked in said aqueous solution of the mercury-containing compound) and pressing said cellulose-containing carrier material to ensure rapid diffusion of the mercury ions from the porous substrate into the carrier material;
(4) placing the wet carrier material obtained in Step (3) and containing diffused mercury ions in a horizontal position and irradiating said wet carrier material with full-spectrum bright light, thereby carrying out a photochemically initiated radical reaction of the carrier material and binding said mercury ions to cellulose molecules within the carrier material, wherein said mercury ions become tightly bound to the carrier material and consequently, impart bactericidal and virucidal properties to said carrier material;
(5) intermediate rinsing of the carrier material obtained in Step (4) with running water;
(6) fixing the rinsed carrier material obtained in Step (5), which contains the bound mercury ions, by shortly immersing said carrier material into a hot aqueous solution of alkali, thereby hydrating and neutralising the bound mercury ions;
(7) washing and rinsing the carrier material obtained in Step (6) with running water several times to remove water-soluble salts and water-insoluble (precipitated) oxides of mercury-containing compounds which did not react in the photochemical reaction; and
(8) air or vacuum drying of the washed carrier material from Step (7) to obtain the ready-to-use carrier material having bactericidal and virucidal properties.

Unless otherwise defined, "mercurisation" in the present invention refers to the process of impregnating of cellulose-containing carrier materials with mercury atoms or ions capable of forming strong chemical bonds with these carrier materials, for imparting bactericidal and virucidal properties to these carrier materials. In fact, mercury has bactericidal and virucidal properties and can be used in the present invention due to its oligodynamic effect, which is a biocidal or virucidal effect of a metal that occurs even in low concentrations.

Unless specifically stated, the "mercury-containing compound" in the present invention refers to any water-soluble salt of mercury capable of imparting bactericidal and virucidal properties to carrier materials. Non-limiting examples of the mercury-containing compounds are water-soluble mercury halides, for example mercury chloride (HgCl₂).

Unless otherwise defined, the "carrier material" in the present invention refers to any industrial cellulose-containing carrier material of choice, which is required to be mercurised, depending on its application. Non-limiting examples of such material are cotton and linen fabrics, cardboard, cellophane film, polymeric film, fibre, filament, sheath, woven or non-woven fabrics, knit fabrics, or any type of fabric or material that is used to make an article having bactericidal or virucidal properties. Non-limiting examples of articles obtained from this carrier material are protective bactericidal masks, filters for air conditioners for sterilising air supplied to clean rooms or operating rooms, bactericidal underwear for soldiers and people engaged in extreme and dangerous activities, wound dressings, plasters and gauzes in surgery and therapy, for example, in the treatment of skin burns and wounds, surgical drapes and overalls for medical personnel, antimicrobial packaging of sterile instruments, medicines and pharmaceuticals, dosage forms coating, household wipes for the prevention of intestinal diseases, toilet paper, facial wipes *etc.*

Unless otherwise defined, the "porous substrate" in the present invention refers to any support material of choice having a high degree of porosity and hydrophilicity, and providing support for the carrier material. Non-limiting examples of such porous substrates are a filter paper, foam rubber, cloth, fabric *etc.*

In Step (4) of the method of the present invention, the wet carrier material which is obtained in Step (3) and contains the diffused mercury ions, is horizontally positioned and irradiated with full-spectrum bright light including UV and IR light. Unless otherwise defined, "full-spectrum bright light" is light that covers the electromagnetic spectrum from infrared to near-ultraviolet of all corresponding wavelengths. In some embodiments, the full-spectrum bright light includes a UV light with the wavelength range of approximately 250-450 nm.

If the carrier material is thick enough (such as cotton fabrics or cloth, cardboard, *etc*.), the temperature-dependent diffusion coefficient of the solution becomes isotropic when exposed to IR heating of the surface. In other words, heating the surface of the carrier material with the IR radiation causes the diffusion coefficient to become different in all directions, which leads to the development of an intense vertical flow of the solution. This is accompanied by the evaporation of the solvent and the accumulation of solutes in the near-surface layer of the carrier material. On the other hand, if the carrier material is thin (cellophane film, *etc*.), the process of accumulation of the solutes occurs throughout the entire thickness of the film.

At the same time, under the UV irradiation of the carrier material containing the diffused mercury ions, the photochemically initiated radical reaction takes place. Mechanism behind this reaction still remains unclear. However, the present inventors speculated that under the UV irradiation, as a result of the cleavage of the C-H bond of the pyranose ring, the abstraction of a hydrogen atom in the cellulose-containing material occurs with the formation of a macroradical of the cellulose molecule. This step is intermediate. Further, in the course of this photochemical reaction, mercury ions from the diffused aqueous solution are added to the cellulose radicals yielding organometallic compounds, in which the mercury ions are attached to the cellulose molecules of the carrier material via the strong mercury-carbon bond, which is highly covalent. The oxidation state of the mercury ions decreases, thereby imparting bactericidal and virucidal properties to this carrier material. Below is the proposed mechanism for the photochemically induced radical reaction of cellulose in the presence of mercury ions together with the intermediate step:

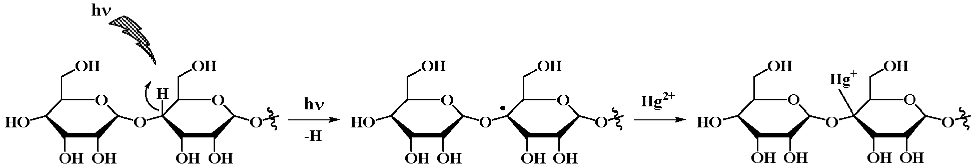

The concentration of mercury ions in the carrier material depends on the irradiation intensity, including the power of the light source, distance to the light source and the time of exposure. The observed colour of the mercury-carrier material in Step (4) is milky white.

In step (6) of the method according to the present invention, the carrier material obtained in step (4), which contains bound mercury ions, is "fixated" (subjected to fixation) by briefly immersing said carrier material in a hot aqueous solution of alkali, thereby hydrating and neutralising the mercury ions. In this step, the hydroxyl ions of the alkali bind to the mercury ions through ion-dipole bonds of mainly electrostatic character, which is part of the organometallic structure shown above. As a result of this hydration, the mercury ions are reduced and become neutral, while the carrier material undergoing this photochemical reaction becomes coloured (depending on the concentration of the original solution and the exposure time). The obtained colour of the carrier material originates from the reduced mercury and supports the proposed above mechanism.

Molecules of the mercury-containing compound, such as mercury chloride (HgCl₂), that did not participate in the photochemical reaction in Step (4), when combined with alkali in Step (5), are converted into water-soluble alkali mercury salts and insoluble mercury oxides, while the latter are precipitated. Further intensive flushing and rinsing with running water in Step (6) leads to the washing out of all aforementioned, unreacted and not participating in the photochemical reaction, soluble and water-insoluble compounds. After air or vacuum drying in Step (7), the product is ready for use.

The method of the present invention also allows to obtain selectively mercurised materials or products/articles obtained from this carrier material, in which the irradiated areas form a dark pattern or image having grey to black colour, that also possess the bactericidal and virucidal properties. In this case, mercurisation is performed in all steps, and the irradiation in Step (4) is carried out through a punctured/perforated or slotted/cut-out template or a heat-resistant negative glass slide.

The method of the present invention has several advantages over the known methods:
✔ Bactericidal and virucidal materials obtained by the method of the present invention have a wide spectrum of bactericidal and virucidal effects.
✔ Obtaining bactericidal and virucidal materials according the method of the present invention does not require changing or modifying the existing technologies for obtaining the carrier materials, since both industrial carrier materials and products from them can be successfully used in the present method.
✔ The method of the present invention is distinguished by technological simplicity, which makes it possible to obtain bactericidal and virucidal materials in a minimum number of simple process steps.
✔ The method of the present invention does not require expensive reagents and can be used in an inexpensive conveyor manufacture.
✔ The present method can be easily adapted to the existing manufacturing technologies, which allow large-scale production with minimal cost.
✔ The method of the present invention allows manufacturing of coloured bactericidal and virucidal materials or having dark pattern or image formed by the bactericidal and virucidal materials.
✔ The present method makes it possible to manufacture highly bactericidal and virucidal materials without almost any leachable substances in the solutions with which they contact. This imparts the materials stability in alkaline solutions and allows a large number of washes with commercial washing products.
✔ The mechanism of bactericidal and virucidal action of mercury-containing materials allows them to maintain stable biological activity when exposed to many microorganisms, *i.e*., with prolonged use.

The bactericidal and virucidal material produced by the method of the present invention can be used in the following applications: protective bactericidal masks, filters for air conditioners for sterilising air supplied to clean rooms or operating rooms, bactericidal and virucidal plasters for external use, bactericidal underwear for soldiers and people engaged in extreme and dangerous activities, wound dressings, plasters and gauzes in surgery and therapy, for example, in the treatment of skin burns and wounds, purulent wounds, fistulas and bedsores, in surgical drapes and overalls for medical personnel, antimicrobial packaging of sterile instruments, medicines and pharmaceuticals, dosage forms coating, household wipes for the prevention of intestinal diseases, toilet paper, facial wipes *etc.*

### EXAMPLES

### Example 1: Mercurisation of cotton fabric or cotton-fabric articles

Aqueous solutions of mercury chloride (HgCl₂) having concentrations from 0.1 M to 0.01 M are prepared in advance. In this example, the optional concentrations of two solutions are 0.1 M and 0.01 M. Also, 7-10% aqueous alkali solution (KOH in the present example) is prepared in advance.

Ashless filter paper is soaked in or wetted with the prepared aqueous solution of the mercury chloride (HgCl₂) and placed on the bottom of the glass bath in 2-3 layers. A cotton fabric is placed over the wet filter paper and pressed tightly. The resulting sample is irradiated with full-spectrum bright light from a high-pressure mercury lamp (power 1 kW) located at a height of 20-25 cm from the surface of the sample for 5-10 minutes. After that, the cotton fabric is immersed for 7-10 seconds in the prepared alkali solution heated to 70-80 °C, in which the cotton fabric becomes dark.

The final colour of the product and, accordingly, the mercury concentration in the carrier material depends on the concentration of the initial mercury solution, as well as the power of the luminous flux incident on the carrier material, the irradiation time and distance to the light source (mercury lamp in the present example). The last three parameters are combined in the following table in the "Total Irradiation Energy" column.

Finally, the coloured cotton fabric is intensively washed and rinsed with running water to remove all unreacted water-soluble and insoluble mercury compounds. After air drying, the sample of the bactericidal and antiviral cotton fabric is ready for use. The results of these experiments are presented in **Table 1:**

**Table 1: Mercurisation of cotton fabric**

| Concentration of HgCl₂ (M) | Height (cm) | Time (min) | Total irradiation energy (kJ) | Colour |
|---|---|---|---|---|
| 0.01 | 25 | 6 | 19.8 | Greyish |
| 0.1 | 20 | 6 | 27 | Dark brown |
| 0.1 | 20 | 8 | 36 | Black |

To determine the bactericidal properties of the materials obtained, the microbiological analysis for the bactericidal activity of the mercurised cotton-fabric samples was carried out and evaluated by "HyLabs", certified by ISO and ISRAC and accredited by the Israeli Ministry of Health.

HyLabs adhered to the following procedure for microbiological analysis. TSA plates were inoculated with 500 µl from *Staphylococcus aureus* ATCC 6538 and *Pseudomonus aeruginosa* ATCC 9027 10⁵⁻⁶ CFU/ml suspension by spreading technique. In the middle of the plates, a 1 cm × 1 cm fabric was placed. The TSA plates were incubated at 30-35 °C for 24 hours. Done in duplicates. For positive control, the same procedure as above, but without the fabric was carried out. For negative control - the same procedure as above, but without the inoculation step. The results of this study are presented in **Table 2:**

**Table 2: Bactericidal properties of mercurised cotton fabric**

| Microorganism | Coupon | Initial Inoculation (CFU*) | Corrected mean diameter (mm) | NC (mm) |
|---|---|---|---|---|
| *P. aeruginosa* | Bactericide Hg cotton | 1.32 × 10⁵ | 31.62 | 0 |
| *S. aureus* | Bactericide Hg cotton | 2.25 × 10⁵ | 36.50 | |

As seen in above **Table 2,** all tested samples showed a very good bactericidal effect against bacteria *Pseudomonus aeruginosa* and *Staphylococcus aureus.* Of particular note is the excellent bactericidal effect of the tested materials against *Pseudomonas aeruginosa*, against which there are still no reliable drugs.

To determine the virucidal activity of the materials obtained, antiviral tests assessing virucidal activity of the mercurised cotton tissue samples against human coronavirus NL63 were carried out using protocol ISO 18184 by "Virology Research Services Ltd." (London, UK), certified by ISO/IEC 17025:2017 Accreditation No. 111376. The results of the study are presented in **Table 3:**

**Table 3: The average infectious units per ml recovered from the test and reference control materials at a contact time of 2 hours with the NL63 coronavirus**

| Test Condition | Virus recovery control (TCID50/sample) | Antiviral test (TCID50/sample) |
|---|---|---|
| Test Reference | N/A | 7.91E+02 ± 8.05E-14 |
| | 2.93E+05 ± 2.49E+05 | 4.59E+04 ± 1.88E+04 |

As seen in above **Table 3,** under the conditions tested, samples of mercurised cotton fabric display virucidal activity against human coronavirus NL63 when using a contact time of 2 hours. The average recovered titre for the treated material was 791 TCID50/sample compared to the average recovered titre of 45,900 TCID50/sample for the reference control. The Mv value (antiviral activity) was 2.57. The average infectious units per ml recovered from the test and reference control at a contact time of 2 hours with the virus are shown in **Table 4:**

**Table 4: The average infectious units per ml recovered from the test and reference control at a contact time of 2 hours with the virus**

| Test Condition | TCID50 (log 10) | Mv value | % reduction |
|---|---|---|---|
| Test | 2.90 | 2.57 | 99% |
| Control | 5.47 | | |

### Example 2: Mercurisation of cellophane film

Aqueous solutions of mercury chloride (HgCl₂) and KOH are prepared as in **Example 1.** Ashless filter paper is soaked in or wetted with the prepared aqueous solution of mercury chloride and placed on the bottom of the glass bath in 2-3 layers. A cellophane film is placed over the wet filter paper and pressed tightly. The resulting sample is irradiated with the full-spectrum bright light mercury lamp (power 1 kW), fixated with the alkali solution, washed and dried as in **Example 1.** The final colour of the product and, accordingly, the mercury concentration in the carrier material depends on the concentration of the initial mercury solution, as well as the power of the luminous flux incident on the carrier material, the irradiation time and distance to the mercury lamp light source. The last three parameters are combined in the table in the "Total irradiation energy" column. The results of this experiment are presented in the **Table 5:**

**Table 5: Mercurisation of cellophane film**

| Concentration of HgCl₂ (M) | Height (cm) | Time (min) | Total irradiation energy (kJ) | Colour |
|---|---|---|---|---|
| 0.01 | 25 | 3 | 9.9 | Light brown |
| 0.1 | 25 | 3 | 9.9 | Dark brown |

Bactericidal properties of the mercurised cellophane film of the present example were tested by "HyLabs". The test procedure was the same as in **Example 1.** The results of this study are presented in **Table 6:**

**Table 6: Bactericidal properties of mercurised cellophane film**

| Microorganism | Bactericide Hg cotton | Initial Inoculation (CFU*) | Corrected mean diameter (mm) | NC (mm) |
|---|---|---|---|---|
| *S. aureus* | Bactericide | 1.31 × 10⁵ | 28.95 | 0 |
| *P. aeruginosa* | Bactericide | 5.55 × 10⁴ | 28.61 | 0 |
| *S. typhimurium* | Bactericide | 1.55 × 10⁵ | 24.87 | 0 |
| *S. flexneri* | Bactericide | 8.42 × 10⁴ | 32.49 | 0 |

Tested samples showed a very good bactericidal effect against different bacteria, such as *Pseudomonus aeruginosa*, *Staphylococcus aureus*, *Shigella flexneri*, and *Salmonella typhimurium.* Of particular note is the excellent bactericidal effect of the tested materials against *Pseudomonas aeruginosa*, against which there are still no reliable drugs.

### Example 3: Selective mercurisation and obtaining a bactericidal image on a carrier material

Aqueous solutions of mercury chloride (HgCl₂) and KOH are prepared as in **Example 1.** Ashless filter paper is soaked in or wetted with the prepared aqueous solution of mercury chloride and placed on the bottom of the glass bath in 2-3 layers. A carrier material (cellophane film or cotton fabric) is placed over the wet filter paper and pressed tightly. A slotted template made of opaque synthetic material is applied over it. The resulting sample is irradiated with a bright light of a total spectrum mercury lamp (power 1kW), fixated, washed and dried as in **Example 1.** The results of this experiment are presented in **Table 7:**

**Table 7: Selective mercurisation of cellophane film and cotton fabric**

| | Concentration of HgCl₂ (M) | Height (cm) | Time (min) | Total irradiation energy (kJ) | Colour |
|---|---|---|---|---|---|
| Mercury on cellophane | 0.1 | 25 | 3 | 9.9 | Dark brown |
| Mercury on cotton fabric | 0.1 | 20 | 8 | 36 | Black |

## Claims

1. A method for mercurisation of a cellulose-containing carrier material or article obtained from said carrier material, for imparting bactericidal and virucidal activity to said carrier material, said method comprising:
(1) providing an aqueous solution of a water-soluble mercury-containing compound, a porous substrate and the cellulose-containing carrier material;
(2) contacting said porous substrate with said aqueous solution of the mercury-containing compound or soaking said porous substrate into said aqueous solution of the mercury-containing compound;
(3) placing said carrier material of Step (1) in a direct contact with and on top of said porous substrate obtained in Step (2) (wetted with or soaked in said aqueous solution of the mercury-containing compound) and pressing said cellulose-containing carrier material to ensure rapid diffusion of the mercury ions from the porous substrate into the carrier material;
(4) placing the wet carrier material obtained in Step (3) and containing diffused mercury ions in a horizontal position and irradiating said wet carrier material with full-spectrum bright light, thereby carrying out a photochemically initiated radical reaction of the abstraction of a hydrogen atom from cellulose molecules of the carrier material, and binding said mercury ions to cellulose molecules within the carrier material, wherein said mercury ions become tightly bound to the carrier material and consequently, impart bactericidal and virucidal properties to said carrier material;
(5) intermediate rinsing of the carrier material obtained in Step (4) with running water;
(6) fixing the rinsed carrier material obtained in Step (5), which contains the bound mercury ions, by shortly immersing said carrier material into a hot aqueous solution of alkali, thereby hydrating and neutralising the bound mercury ions;
(7) washing and rinsing the carrier material obtained in Step (6) with running water several times to remove water-soluble salts and water-insoluble (precipitated) oxides of mercury-containing compounds which did not react in the photochemical reaction; and
(8) air or vacuum drying of the washed carrier material from Step (7) to obtain the ready-to-use carrier material having bactericidal and virucidal properties.

2. The method of claim 1, wherein said mercury-containing compound is selected from water-soluble salts of mercury.

3. The method of claim 2, wherein said water-soluble salts of mercury are water-soluble mercury halides.

4. The method of claim 3, wherein said water-soluble mercury halide is mercury chloride (HgCl₂).

5. The method of claim 1, wherein said cellulose-containing carrier material is selected from cotton fabrics, cardboard, cellophane film, polymeric film, fibre, filament, sheath, woven or non-woven fabrics, knit fabrics, or any type of fabrics or material that is used to make protective bactericidal masks, filters for air conditioners for sterilising air supplied to clean rooms or operating rooms, bactericidal underwear for soldiers and people engaged in extreme and dangerous activities, wound dressings, plasters and gauzes in surgery and therapy or in the treatment of skin burns and wounds, purulent wounds, fistulas and bedsores, in surgical drapes and overalls for medical personnel, antimicrobial packaging of sterile instruments, medicines and pharmaceuticals, dosage forms coating, household wipes for the prevention of intestinal diseases, toilet paper and facial wipes.

6. The method of claim 1, wherein said porous substrate is selected from filter paper, foam rubber, cloth, fabric and other water-swellable materials.

7. The method of claim 1, wherein said full-spectrum bright light contains UV radiation within the wavelength range of about 250-450 nm.

8. The method of claim 1, wherein a punctured, or perforated, or cut-out, or slotted template, or a heat-resistant negative glass slide is further placed over the wet carrier material in Step (4), and the irradiation with full-spectrum bright light is carried out through said template or said heat-resistant negative glass slide to obtain the dark pattern or image on the carrier material, wherein said dark pattern or image has bactericidal and virucidal activity.

9. The method of claim 1, wherein the temperature of said hot aqueous solution of alkali, into which said carrier material is immersed in Step (5) for fixation is 70-80 °C.

10. The carrier material having bactericidal and virucidal activity, obtained by the method of any one of claims 1 to 9, where said carrier material is suitable for use in protective bactericidal and virucidal masks.

11. The carrier material having bactericidal and virucidal activity, obtained by the method of any one of claims 1 to 9, where said carrier material is suitable for use in filters for air conditioners for sterilising air supplied to clean rooms or operating rooms.

12. The carrier material having bactericidal and virucidal activity, obtained by the method of any one of claims 1 to 9, where said carrier material is suitable for use in bactericidal underwear for soldiers and people engaged in extreme and dangerous activities.

13. The carrier material having bactericidal and virucidal activity, obtained by the method of any one of claims 1 to 9, where said carrier material is suitable for use in wound dressings, plasters and gauzes in surgery and therapy, or in the treatment of skin burns and wounds, purulent wounds, fistulas and bedsores, and in surgical drapes or overalls for medical personnel.

14. The carrier material having bactericidal and virucidal activity, obtained by the method of any one of claims 1 to 9, where said carrier material is suitable for use in antimicrobial packaging of sterile instruments, medicines and pharmaceuticals, dosage forms coating, household wipes for the prevention of intestinal diseases, toilet paper or facial wipes.

## Patentansprüche

1. Verfahren zur Merkurisierung eines Zellulose enthaltenden Trägermaterials oder eines aus dem Trägermaterial erhaltenen Artikels, um dem Trägermaterial eine bakterizide oder viruzide Wirkung zu verleihen, wobei das Verfahren umfasst:
(1) Bereitstellen einer wässrigen Lösung einer wasserlöslichen Quersilber enthaltenden Verbindung, eines porösen Substrats und des Zellulose enthaltenden Trägermaterials;
(2) Kontaktieren des porösen Substrats mit der wässrigen Lösung der Quecksilber enthaltenden Verbindung oder Tränken des porösen Substrats in der wässrigen Lösung der Quecksilber enthaltenden Verbindung;
(3) Anordnen des Trägermaterials aus Schritt (1) in einem direkten Kontakt mit und auf dem in Schritt (2) erhaltenen porösen Substrat (das mit der wässrigen Lösung der Quecksilber enthaltenden Verbindung benetzt oder in dieser getränkt ist) und Pressen des Zellulose enthaltenden Trägermaterials, um eine schnelle Diffusion der Quecksilberionen von dem porösen Substrat in das Trägermaterial sicherzustellen;
(4) Anordnen des in Schritt (3) erhaltenen benetzten und diffundierte Quecksilberionen enthaltenden Trägermaterials in einer waagrechten Position und Bestrahlen des benetzten Trägermaterials mit hellem Vollspektrumlicht, wodurch eine photochemisch eingeleitete Radikalreaktion der Abtrennung eines Wasserstoffatoms von Zellulosemolekülen des Trägermaterials ausgeführt wird, und Binden der Quecksilberionen an Zellulosemoleküle in dem Trägermaterial, wobei die Quecksilberionen eng an das Trägermaterial gebunden werden und folglich dem Trägermaterial bakterizide und viruzide Eigenschaften verleihen;
(5) zwischengeschaltetes Spülen des in Schritt (4) erhaltenen Trägermaterials mit fließendem Wasser;
(6) Fixieren des in Schritt (5) erhaltenen gespülten Trägermaterials, das die gebundenen Quecksilberionen enthält, durch kurzes Eintauchen des Trägermaterials in eine heiße wässrige alkalischen Lösung, wodurch die gebundenen Quecksilberionen hydratisiert und neutralisiert werden;
(7) Waschen und Spülen des in Schritt (6) erhaltenen Trägermaterials mit fließendem Wasser mehrere Male zum Entfernen wasserlöslicher Salze und wasserunlöslicher (präzipitierter) Oxide Quecksilber enthaltender Verbindungen, die nicht in der photochemischen Reaktion reagiert haben; und
(8) Luft- oder Vakuum-Trocknen des aus Schritt (7) erhaltenen gewaschenen Trägermaterials zum Erhalten des gebrauchsfertigen Trägermaterials, das bakterizide und viruzide Eigenschaften hat.

2. Verfahren gemäß Anspruch 1, wobei die Quecksilber enthaltende Verbindung aus wasserlöslichen ausgewählt ist.

3. Verfahren gemäß Anspruch 2, wobei die wasserlöslichen Quecksilbersalze wasserlösliche Quecksilberhalogenide sind.

4. Verfahren gemäß Anspruch 3, wobei das wasserlösliche Quecksilberhalogenid Quecksilberchlorid (HgCl₂) ist.

5. Verfahren gemäß Anspruch 1, wobei das Zellulose enthaltende Trägermaterial aus Baumwollgeweben, Karton, Zellophanfolie, Polymerfolie, Fasern, Filamenten, Präservativen, Geweben oder Vliesstoffen, Gestricken oder einer beliebigen Art von Geweben oder Material ausgewählt ist, das dazu verwendet wird, bakterizide Schutzmasken, Filter für Klimaanlagen zum Sterilisieren von Luft, die an Reinräume oder Operationsräume geliefert wird, bakterizide Unterwäsche für Soldaten und Menschen, die extremen und gefährlichen Tätigkeiten nachgehen, Wundverbände, Pflaster und Verbandsmull in der Chirurgie und Therapie oder in der Behandlung von Hautverbrennungen und Wunden, eitrigen Wunden, Fisteln und wundgelegenen Stellen, in chirurgischen Abdeckungen und Overalls für medizinisches Personal, antimikrobiellen Verpackungen für sterile Instrumente, Medikamente und Pharmazeutika, Arzneiformbeschichtungen, Haushaltswischtüchern zur Prävention von Darmerkrankungen, Toilettenpapier und Gesichtstüchern herzustellen.

6. Verfahren gemäß Anspruch 1, wobei das poröse Substrat aus Filterpapier, Schaumgummi, Gewebe und anderen in Wasser quellbaren Materialen ausgewählt wird.

7. Verfahren gemäß Anspruch 1, wobei das Vollspektrumlicht UV-Strahlung in dem Wellenlängenbereich von ungefähr 250 bis 450 nm enthält.

8. Verfahren gemäß Anspruch 1, wobei in Schritt (4) ferner eine durchbohrte oder perforierte oder ausgeschnittene oder gestanzte Schablone oder eine wärmebeständige Glas-Negativplatte über dem benetzten Trägermaterial angeordnet wird und die Bestrahlung mit hellem Vollspektrumlicht durch diese Schablone oder diese wärmebeständige Glas-Negativplatte hindurch durchgeführt wird, um das dunkle Muster oder Bild auf dem Trägermaterial zu erhalten, wobei das dunkle Muster oder Bild eine bakterizide oder viruzide Wirkung hat.

9. Verfahren gemäß Anspruch 1, wobei die Temperatur der heißen wässrigen alkalischen Lösung, in die das Trägermaterial in Schritt (5) zu Fixierung eingetaucht wird, 70 bis 80°C beträgt.

10. Trägermaterial, das eine bakterizide oder viruzide Wirkung hat, erhalten durch das Verfahren gemäß einem der Ansprüche 1 bis 9, wobei das Trägermaterial zur Verwendung in bakteriziden und viruziden Schutzmasken geeignet ist.

11. Trägermaterial, das eine bakterizide oder viruzide Wirkung hat, erhalten durch das Verfahren gemäß einem der Ansprüche 1 bis 9, wobei das Trägermaterial zur Verwendung in Filtern für Klimaanlagen für Klimaanlagen zum Sterilisieren von Luft, die an Reinräume oder Operationsräume geliefert wird, geeignet ist.

12. Trägermaterial, das eine bakterizide oder viruzide Wirkung hat, erhalten durch das Verfahren gemäß einem der Ansprüche 1 bis 9, wobei das Trägermaterial zur Verwendung in bakterizider Unterwäsche für Soldaten und Menschen, die extremen und gefährlichen Tätigkeiten nachgehen, geeignet ist.

13. Trägermaterial, das eine bakterizide oder viruzide Wirkung hat, erhalten durch das Verfahren gemäß einem der Ansprüche 1 bis 9, wobei das Trägermaterial zur Verwendung in Wundverbänden, Pflastern und Verbandsmull in der Chirurgie und Therapie oder in der Behandlung von Hautverbrennungen und Wunden, eitrigen Wunden, Fisteln und wundgelegenen Stellen, in chirurgischen Abdeckungen und Overalls für medizinisches Personal geeignet ist.

14. Trägermaterial, das eine bakterizide oder viruzide Wirkung hat, erhalten durch das Verfahren gemäß einem der Ansprüche 1 bis 9, wobei das Trägermaterial zur Verwendung in antimikrobiellen Verpackungen für sterile Instrumente, Medikamente und Pharmazeutika, Arzneiformbeschichtungen, Haushaltswischtüchern zur Prävention von Darmerkrankungen, Toilettenpapier oder Gesichtstüchern geeignet ist.

## Revendications

1. Méthode pour la mercurisation d'un matériau de support contenant de la cellulose ou d'un article obtenu à partir dudit matériau de support, pour conférer une activité bactéricide et virucide audit matériau de support, ladite méthode comprenant :
(1) la fourniture d'une solution aqueuse d'un composé contenant du mercure soluble dans l'eau, d'un substrat poreux et du matériau de support contenant de la cellulose ;
(2) la mise en contact dudit substrat poreux avec ladite solution aqueuse du composé contenant du mercure ou le trempage dudit substrat poreux dans ladite solution aqueuse du composé contenant du mercure ;
(3) le placement dudit matériau de support de l'étape (1) en contact direct avec le et sur le dessus dudit substrat poreux obtenu dans l'étape (2) (mouillé avec ou trempé dans ladite solution aqueuse du composé contenant du mercure) et le pressage dudit matériau de support contenant de la cellulose pour assurer une diffusion rapide des ions mercure depuis le substrat poreux dans le matériau de support ;
(4) le placement en position horizontale du matériau de support mouillé obtenu dans l'étape (3) et contenant des ions mercure diffusés en position horizontale et l'irradiation dudit matériau de support mouillé avec une lumière vive à spectre complet, et ainsi la mise en oeuvre d'une réaction radicalaire initiée par voie photochimique de l'abstraction d'un atome d'hydrogène à partir de molécules de cellulose du matériau de support, et la liaison desdits ions mercure à des molécules de cellulose à l'intérieur du matériau de support, moyennant quoi lesdits ions mercure deviennent étroitement liés au matériau de support et, par conséquent, confèrent des propriétés bactéricides et virucides audit matériau de support ;
(5) le rinçage intermédiaire à l'eau courante du matériau de support obtenu dans l'étape (4) ;
(6) la fixation du matériau de support rincé obtenu dans l'étape (5), qui contient les ions mercure liés, par immersion brève dudit matériau de support dans une solution aqueuse chaude d'alcali, ce qui ainsi hydrate et neutralise les ions mercure liés ;
(7) le lavage et le rinçage du matériau de support obtenu dans l'étape (6) plusieurs fois à l'eau courante pour éliminer les sels solubles dans l'eau et les oxydes insolubles dans l'eau (précipités) de composés contenant du mercure qui n'ont pas réagi dans la réaction photochimique ; et
(8) le séchage à l'air ou sous vide du matériau de support lavé provenant de l'étape (7) pour que soit obtenu le matériau de support prêt à l'emploi ayant des propriétés bactéricides et virucides.

2. Méthode selon la revendication 1, dans laquelle ledit composé contenant du mercure est choisi parmi les sels de mercure solubles dans l'eau.

3. Méthode selon la revendication 2, dans laquelle lesdits sels de mercure solubles dans l'eau sont des halogénures de mercure solubles dans l'eau.

4. Méthode selon la revendication 3, dans laquelle ledit halogénure de mercure soluble dans l'eau est le chlorure de mercure (HgCl₂).

5. Méthode selon la revendication 1, dans laquelle ledit matériau de support contenant de la cellulose est choisi parmi les étoffes de coton, le carton, un film de cellophane, un film de polymère, une fibre, un filament, une gaine, les étoffes tissées ou non tissées, les étoffes tricotées, ou n'importe quel type d'étoffe ou de matériau qui est utilisé pour faire des masques protecteurs bactéricides, les filtres pour climatiseurs pour stériliser l'air fourni aux salles blanches ou aux salles d'opération, un sous-vêtement bactéricide pour soldats et personnes engagées dans des activités extrêmes et dangereuses, les pansements, emplâtres et gazes en chirurgie et thérapie ou dans le traitement de plaies et de brûlures cutanées, de blessures purulentes, de fistules et d'escarres, dans les champs chirurgicaux et combinaisons pour le personnel médical, le conditionnement antimicrobien d'instruments stériles, de médicaments et de produits pharmaceutiques, un enrobage de formes posologiques, les lingettes de ménage pour la prévention de maladies intestinales, le papier toilette et les lingettes faciales.

6. Méthode selon la revendication 1, dans laquelle ledit substrat poreux est choisi parmi le papier filtre, le caoutchouc mousse, un linge, une étoffe et d'autres matériaux gonflables par l'eau.

7. Méthode selon la revendication 1, dans lequel la lumière vive à spectre complet contient un rayonnement UV situé dans la gamme de longueurs d'onde allant d'environ 250 à 450 nm.

8. Méthode selon la revendication 1, dans lequel une matrice trouée, ou perforée, ou découpée, ou fendue, ou une lamelle de verre négatif résistant à la chaleur est en outre placée sur le matériau de support mouillé dans l'étape (4), et l'irradiation avec une lumière vive à spectre complet est effectuée à travers ladite matrice ou ladite lamelle de verre négatif résistant à la chaleur pour que soit obtenu le motif ou l'image sombre sur le matériau de support, dans laquelle ledit motif ou image sombre a une activité bactéricide et virucide.

9. Méthode selon la revendication 1, dans laquelle la température de ladite solution aqueuse chaude d'alcali, dans laquelle ledit matériau de support est immergé dans l'étape (5) à des fins de fixation, est de 70 à 80 °C.

10. Matériau de support ayant une activité bactéricide et virucide, obtenu par la méthode de l'une quelconque des revendications 1 à 9, lequel matériau de support est utilisable dans des masques protecteurs bactéricides et virucides.

11. Matériau de support ayant une activité bactéricide et virucide, obtenu par la méthode de l'une quelconque des revendications 1 à 9, lequel matériau de support est utilisable dans des filtres pour climatiseurs pour stériliser l'air fourni aux salles blanches ou aux salles d'opération.

12. Matériau de support ayant une activité bactéricide et virucide, obtenu par la méthode de l'une quelconque des revendications 1 à 9, lequel matériau de support est utilisable dans des sous-vêtements bactéricides pour soldats et personnes engagées dans des activités extrêmes et dangereuses.

13. Matériau de support ayant une activité bactéricide et virucide, obtenu par la méthode de l'une quelconque des revendications 1 à 9, lequel matériau de support est utilisable dans des pansements, emplâtres et gazes en chirurgie et thérapie ou dans le traitement de plaies et de brûlures cutanées, de blessures purulentes, de fistules et d'escarres, et dans les champs chirurgicaux et combinaisons pour le personnel médical.

14. Matériau de support ayant une activité bactéricide et virucide, obtenu par la méthode de l'une quelconque des revendications 1 à 9, lequel matériau de support est utilisable dans le conditionnement antimicrobien d'instruments stériles, de médicaments et de produits pharmaceutiques, un enrobage de formes posologiques, les lingettes de ménage pour la prévention de maladies intestinales, le papier toilette ou les lingettes faciales.
